# EUROPEAN PATENT SPECIFICATION

(11) **EP 4 488 552 B1**
(45) Date of publication and mention of the grant of the patent: **05.08.2026**
(21) Application number: 24183652.7
(22) Date of filing: 21.06.2024
(51) Int. Cl.: F16H 59/70, F16H 61/12

(54) **A METHOD AND APPARATUS FOR DETECTING A GEAR POSITION OF A TRANSMISSION**
VERFAHREN UND VORRICHTUNG ZUR ERFASSUNG EINER GETRIEBESTELLUNG EINES GETRIEBES
PROCÉDÉ ET APPAREIL POUR DÉTECTER UNE POSITION DE VITESSE D'UNE TRANSMISSION

(30) Priority: 07.07.2023 CN 202310834941
(43) Date of publication of application: 08.01.2025
(73) Proprietor: Robert Bosch GmbH, 70442 Stuttgart (DE)
(72) Inventor: SUN, Guoan, Jiangsu, 214000 (CN); WANG, Ying, Shanghai, 200335 (CN)

(56) References cited:
- EP-B1- 3 534 044
- CN-A- 115 574 085

## Description

### Technical Field

The present invention relates to a method and apparatus for detecting a gear position of a vehicle transmission.

### Background Art

For an automated mechanical transmission (AMT), the automation of gear shifting requires the vehicle to accurately identify the current gear position, thus avoiding gear shifting failure or malfunction and enhancing the safety of vehicle operation. In existing solutions, gear position is determined by directly detecting the linear displacement of the shift fork that is part of the shift actuator.

EP 3 534 044 B1 relates to a straddled vehicle that includes a gear position sensor abnormality detector which is configured to detect an abnormality of a gear position sensor provided at a crankshaft-supporter-integrated transmission supporter. CN 115 574 085 A relates to an AMT gear displacement sensor reliability inspection method.

### Summary of the Invention

Unreliable identification of the gear position in a vehicle transmission may lead to unexpected acceleration or deceleration of the vehicle, and may even cause traffic accidents. The solution provided in the present application aims to enhance the reliability of gear position identification in the transmission.

According to the present invention, a method for detecting a gear position of a vehicle transmission having the features of claim 1 is disclosed. This method comprises determining a position of a shift fork from a first position sensor; comparing a first transmission ratio and a second transmission ratio when it is determined that the first position sensor indicates that the shift fork is not in neutral, wherein the first transmission ratio is determined by the first position sensor and the second transmission ratio is determined by an input shaft speed and an output shaft speed of the transmission; and entering a gear error handling subroutine when it is determined that the first transmission ratio and the second transmission ratio do not match.

According to the present invention, when it is determined that the first position sensor indicates that the shift fork is in neutral, the position of the transmission component of the shift actuator is optionally determined by a second position sensor; when it is determined that the position of the transmission component of the shift actuator indicated by the second position sensor indicates that the shift fork is not in neutral, the gear error handling subroutine is entered.

In one or more examples of the present invention, optionally, the transmission component of the shift actuator comprises a shift cam, and when the second position sensor indicates that the angle of the shift cam is outside a predetermined range, it is determined that the shift fork is not in neutral.

In one or more examples of the present invention, optionally, the second position sensor is an angle sensor disposed relative to the axle of the shift cam.

In one or more examples of the present invention, optionally, the second position sensor may be a Hall sensor used to detect a rotor angle of a shift motor; the process of determining an angle of the shift cam may include converting the rotor angle into an angle of the shift cam.

According to the present invention, a transmission controller having the features of claim 6 is disclosed. The transmission controller comprises a processor and memory, wherein the memory stores computer program instructions, and when the computer program instructions are executed by the processor, the processor is configured for executing one or more steps according to the method defined in claims 1 to 5.

According to the present invention, a computer program product for detecting gear positions having the features of claim 7 is provided, and when the computer program instructions are executed by a processor, the processor is configured for executing one or more steps according to the method defined in claims 1 to 5.

According to the present invention, a computer-readable storage medium for detecting gear positions having the features of claim 8 is provided, and when instructions are executed by a processor, the processor is configured for executing one or more steps according to the method defined in claims 1 to 5.

The inventors of the present invention have noticed the reliability issues with gear position detection in the prior art, and by designing different additional detection solutions for different gear conditions (engaged or neutral), they aim to improve the reliability of gear position detection, thereby enhancing the safety of vehicle operation.

### Description of Accompanying Drawings

The principles, features and advantages of the present invention, which is defined by the appended claims, will be more fully understood by referring to the detailed description of the specific exemplary embodiments with reference to the accompanying drawings.
FIG. 1 is a block diagram of a vehicle shift control system according to an example of the present invention.
FIG. 2 is a schematic diagram of the shift control process for a vehicle according to an example of the present invention.
FIG. 3A is a flowchart of the gear position detection process for a transmission according to one example of the present invention.
FIG. 3B is a flowchart of the gear position detection process for the transmission according to another example of the present invention.
FIG. 4 is a flowchart of the gear position cross-check process executed by a transmission controller according to one example of the present invention.
FIG. 5 is a block diagram of the transmission controller according to one example of the present invention.

### Specific Embodiments

To provide a clearer understanding of the technical problems, technical solutions, and beneficial technical effects to be addressed by the present invention, the following detailed description of the present invention will be provided with reference to the accompanying drawings and multiple exemplary examples. It should be understood that the specific examples described herein are provided solely for the purpose of explaining the present invention.

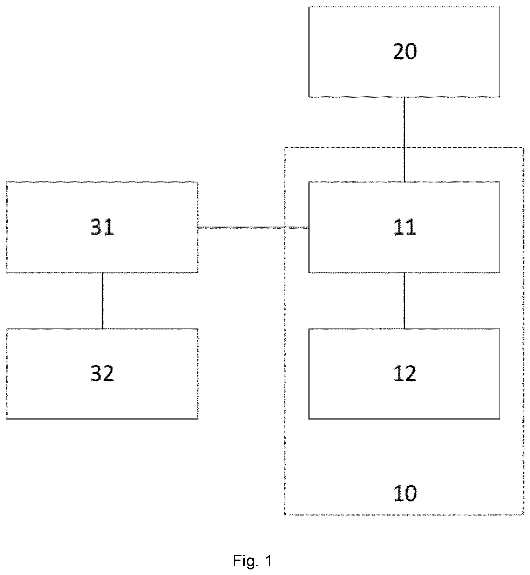

FIG. 1 is a block diagram of a vehicle shift control system according to an example of the present invention. As shown in FIG. 1, the shift control system 10, i.e., transmission system 10, includes a transmission controller 11 and a shift actuator 12. The transmission controller 11 is electrically connectable to the shift actuator 12. The transmission controller 11 is capable of controlling gear shifts by the shift actuator 12 based on, for example, a vehicle speed signal or an accelerator pedal signal, and a shift strategy stored within the transmission controller 11.

The transmission controller 11 and the vehicle controller unit 20 may be communicatively coupled via a CAN bus. For example, the transmission controller 11 may send a shift request to the vehicle controller unit 20 and receive a shift enable command from the vehicle controller unit 20. Furthermore, those skilled in the art would understand that the vehicle controller unit 20 may send signals to the transmission controller 11 such as the desired driving mode, desired wheel torque, accelerator pedal position, and brake pedal position. In turn, the transmission controller 11 may send signals to the vehicle controller unit 20 such as the actual driving mode, actual wheel torque, actual gear position information, and so forth.

The transmission controller 11 and the drive motor controller 31 may be communicatively coupled via a CAN bus. The interaction between the transmission controller 11 and the drive motor controller 31 may involve the transmission controller 11 sending a desired motor operation mode and a desired motor speed to the drive motor controller 31, and the drive motor controller 31 sending an actual motor operation mode and an actual motor speed to the transmission controller 11. The drive motor controller 31 is electrically connected to a motor 32 to control the operation of the latter. The motor 32 is mechanically coupled to the gears in the transmission, thereby transmitting the driving torque of the motor 32 through the gear assembly to the wheels of the vehicle.

The shift actuator 12 includes a shift motor, a transmission component, and a shift fork. Although not shown in FIG. 1, those skilled in the art would understand that the rotational output of the shift motor is converted into the movement of the shift fork through the arrangement of transmission component. The transmission component and shift fork may have various suitable structures and complement each another.

The transmission controller 11 is capable of controlling the start and speed of the shift motor in the shift actuator 12 through a shift motor driver (not shown in FIG. 1). The output end of the shift motor, in coordination with the transmission component, converts the rotational output of the shift motor into axial movement of the shift fork along the input shaft direction of the transmission system. The axial movement of the shift fork can actuate a shift collar or synchronizer, thereby engaging or disengaging the shift gears with the transmission gears, thus enabling gear engagement or disengagement. The movement of the shift fork pushes the shift collar or synchronizer to engage with different transmission gears, enabling the establishment of different transmission ratios, and thereby facilitating gear shifting. In one or more examples of the present invention, the position of the shift fork is determined by detecting the beginning or end of the axial movement of the shift fork through different means.

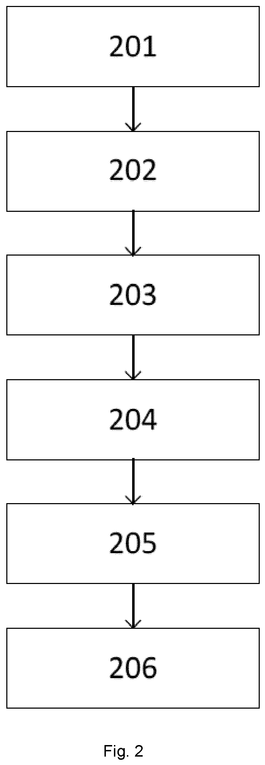

FIG. 2 is a schematic diagram of the shift control process for a vehicle according to an example of the present invention. FIG. 2 schematically illustrates the stages 201 to 206 of the gear shifting process. In this example, an electrically driven two-speed automatic transmission is taken as an example to briefly describe the gear shifting process and illustratively specify the timing for determining the gear position.

Stage 201 is the shift request stage, during which the transmission controller determines whether to execute a shift based on signals such as current vehicle speed, accelerator pedal signal, brake pedal signal, etc., as well as the shift strategy stored within the transmission controller. When the transmission controller determines that the shift conditions are met, a shift request is sent to the vehicle controller unit and the stage 202 is entered in response to the shift enable command from the vehicle controller unit.

In stage 202, the transmission controller sends a torque unload command to the drive motor controller, causing the output torque of the drive motor to decrease to zero.

After the torque unload is completed, in stage 203, the transmission controller executes the gear disengagement operation. At this stage, the transmission controller controls the shift motor, which drives the shift fork to move axially along the input shaft direction of the transmission system, pushing the shift collar to disengage from the transmission gear. During this process, the transmission controller monitors the position of the shift fork to determine whether it is in neutral. When the transmission controller determines that the shift fork is in neutral, it stops driving the shift motor. The transmission controller is capable of determining the gear position using various shift fork position sensors. In one or more examples of the present invention, additional methods for detecting a fork position are described.

In stage 204, the transmission controller sends a target speed signal to the drive motor controller. The drive motor controller adjusts the motor speed accordingly, controlling the speed difference between the synchronous side and the synchronizing side, in preparation for the gear engagement operation in stage 205.

In stage 205, after the drive motor controller completes the speed adjustment, the transmission controller drives the shift motor again to actuate the shift fork, engaging the shift collar with the transmission gear. During this gear engagement process, the transmission controller monitors the position of the shift fork to determine if it has reached the target gear position.

In stage 206, after completing the gear engagement, the transmission controller sends a torque restore request and a target torque to the drive motor controller based on the target torque from the vehicle controller unit.

In the aforementioned vehicle shift control process, it is necessary to monitor the position of the shift fork to determine the gear position. As mentioned earlier, in known methods, the gear position is determined solely by detecting the linear displacement of the position of the shift fork. When the position sensor of the shift fork fails or the detected displacement value is near a critical threshold, the determination of the gear position may become unreliable. One or more examples of the present invention provide additional methods to cross-check the gear position, enhancing the reliability of gear position detection and thereby improving the safety of vehicle operation.

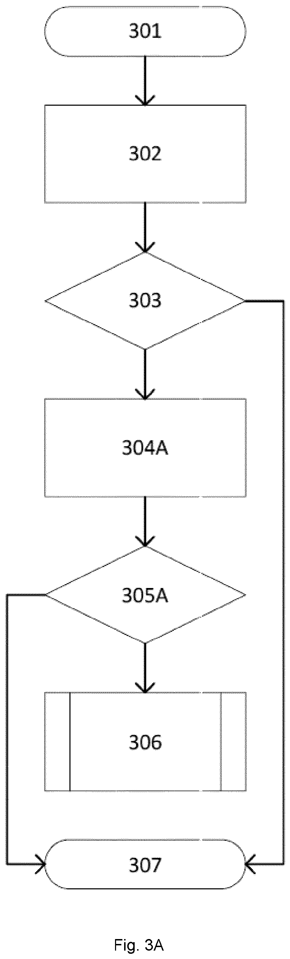

FIG. 3A is a flowchart of the gear position detection process for a transmission according to one example of the present invention. In this example, cross-checking the gear position is considered during the gear shifting process to ensure both driving performance and vehicle safety. As mentioned earlier, in known methods, the gear position is determined by detecting the linear displacement of the position of the shift fork using a single position sensor. In this example, the gear position is checked by considering the input shaft speed and output shaft speed.

The process of detecting the gear position in the transmission starts from step 301.

In step 302, a gear transmission ratio, i.e., the first transmission ratio, is determined using a fork position sensor. The fork position sensor is a position sensor disposed relative to the shift fork itself. The position sensor may be a magnetic, optical, or inductive-based sensor. In one example, the position sensor may be disposed on a shift fork shaft to detect a swing angle of the fork shaft. In this example, the position sensor is a Hall sensor. The Hall effect may be used to convert the sensed magnetic field signal into a PWM signal. Those skilled in the art would understand that the duty cycle of the PWM signal can be converted into the displacement distance of the end of the shift fork arm through calibration or calculation. The transmission ratio may be determined from a position-gear mapping table based on the fork position indicated by the fork position sensor. For example, when the fork position is within the range of [-4.5, 4.5] millimeters, the gear position is determined to be neutral; when the fork position is within the range of [-8.5, -4.5], the gear position is determined to be first gear; when the fork position is within the range of [4.5, 8.5], the gear position is determined to be second gear. Here, the fork position refers to the position of the end of the shift fork arm.

In step 303, it is determined whether the fork position sensor indicates that the fork position is in neutral. If so, the method proceeds to step 307 and ends; otherwise, it enters step 304A. In step 304A, a reference transmission ratio, i.e., the second transmission ratio, is determined. Those skilled in the art would understand that the second transmission ratio is obtained by the ratio of the input shaft speed to the output shaft speed. The input and output shaft speeds may be obtained using a speed sensor installed at the end of the shaft. Thereafter, in step 305A, the transmission ratio determined by the fork position sensor is compared with the second transmission ratio determined by the input and output shaft speeds. When both ratios are consistent, the process proceeds to step 307 and ends; otherwise, it enters step 306.

In step 306, a gear error handling subroutine is entered. In other words, when the transmission ratio determined by the fork position sensor and the second transmission ratio determined by the input and output shaft speeds are inconsistent, the current gear position information is deemed unreliable, and the system enters a fault handling program. The fault handling program may, for example, reboot the vehicle, interrupt torque transmission of the vehicle to allow the vehicle to slow down, or trigger a vehicle braking process. In the gear error handling subroutine of this example, a zero torque request is sent to the drive motor controller of the vehicle.

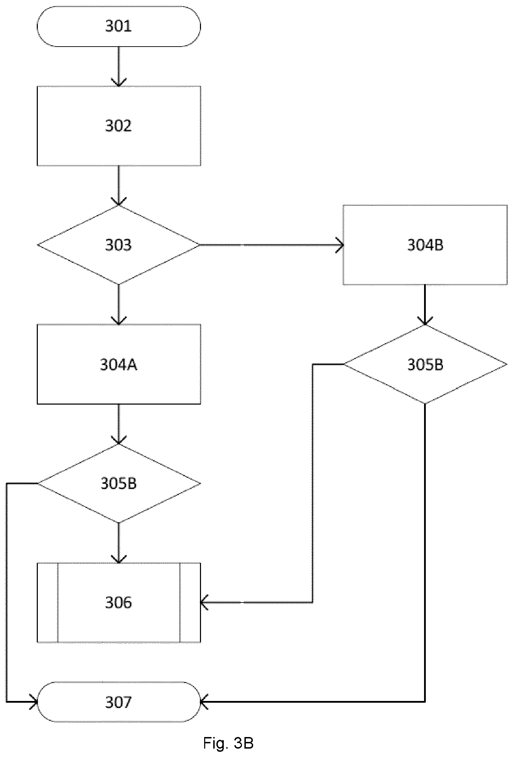

FIG. 3B is a flowchart of the gear position detection process for the transmission according to another example of the present invention. In the example shown in FIG. 3A, when it is determined that the fork position sensor indicates that the fork position is in neutral, the method proceeds to step 307 and ends. This example differs from that shown in FIG. 3A in that a check is also performed in the case where the fork position sensor indicates that the fork position is in neutral, thus covering all possible scenarios of gear position detection. Unlike checking that the gear position is not in neutral using input and output shaft speeds, this example checks if the gear position is in neutral by detecting the position of the transmission component of the shift actuator.

The process of detecting the gear position in the transmission starts from step 301.

In step 302, the gear transmission ratio is determined using the fork position sensor. The gear transmission ratio is determined from the position-gear mapping table based on the fork position indicated by the fork position sensor.

In step 303, it is determined whether the fork position sensor indicates that the fork position is in neutral. If so, the method proceeds to step 304B and ends; otherwise, it enters step 304A. In step 304B, another position sensor is utilized to detect the position of the transmission component of the shift actuator. As mentioned earlier, the shift actuator includes a shift motor, a shift transmission component, and a shift fork. The transmission controller controls the start and speed of the shift motor through a shift motor driver. The rotational output of the shift motor is converted into the movement of the shift fork through the arrangement of the transmission component. The transmission component and shift fork may have various suitable structures and complement each another. Those skilled in the art would understand that a configured transmission component is capable of transmitting the rotation of the output shaft of the shift motor to the shift fork shaft. The swing of the shift fork shaft drives the movement of the end of the shift fork arm, thereby causing the shift collar to engage or disengage with the transmission gear, thus enabling gear engagement or disengagement.

In one example, the transmission component comprises a shift cam. When the other position sensor indicates that the angle of the shift cam is outside a predetermined range, it is determined that the shift fork is not in neutral. Those skilled in the art would understand that the shift motor can rotate the shift cam through gears, and by engaging with the shift fork through a cam slot, the shift cam can cause displacement of the end of the shift fork arm while rotating. Since the angle range of the shift cam corresponds to the gear position, the other position sensor may be an angle sensor disposed relative to the axle of the shift cam. The range of rotation angles of the shift cam detected by the angle sensor can indirectly determine whether the shift fork is in neutral. The duty cycle of the PWM signal from the angle sensor of the shift cam, the angle range, and whether it is in neutral may be calibrated. In another variant, the other position sensor may be a Hall sensor that detects the rotor angle of the shift motor. It can be understood that the rotation angle of the shift cam may be obtained through the transmission ratio of the mechanical transmission design from the output shaft of the shift motor to the shift cam. An absolute angle of the shift cam may be obtained based on an initial angle of the shift cam and a relative angle of the current shift cam obtained from the Hall sensor.

In step 305B, when it is determined that the position of the transmission component of the shift actuator determined by the other position sensor indicates that the shift fork is not in neutral, the gear error handling subroutine of step 306 is entered.

In the gear error handling subroutine of step 306, a zero torque request is sent to the drive motor controller of the vehicle.

In the above example, using position sensors arranged relative to the transmission component may improve the precision of gear position monitoring and optimize the positioning of sensors used for gear position monitoring. The dual detection of whether the gear is in neutral will also help prevent accidents caused by the failure of a single position sensor in extreme cases.

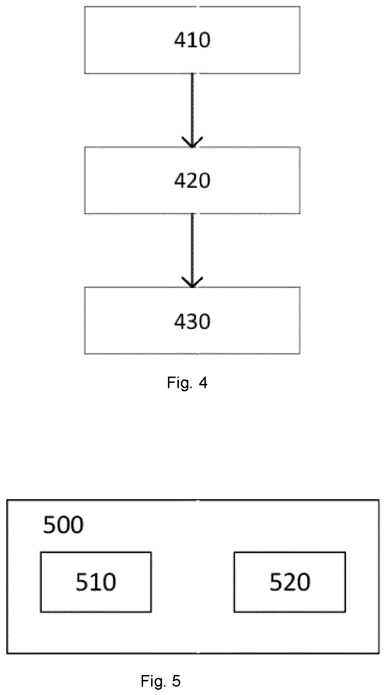

FIG. 4 is a flowchart of the gear position cross-check process executed by a transmission controller according to one example of the present invention. The transmission controller may be the transmission controller 11 as described in FIG. 1.

As shown in FIG. 4, the method of gear position cross-checking executed by the transmission controller includes steps 401 to 430.

In step 410, the position of the shift fork is determined from the first position sensor. Those skilled in the art would understand that the first position sensor may be any suitable sensor capable of detecting the fork position of a shift fork.

In step 420, a cross-check is performed on the position of the shift fork determined from the first position sensor, thereby improving the accuracy of gear recognition and thus enhancing the safety of vehicle operation. Unlike the prior art, in this example, checks are conducted for the scenarios indicated by the first position sensor, whether the gear is in neutral or not in neutral (e.g., first gear and second gear), thus covering all possible gear positions. Cross-checking of the gear position may be performed at any suitable time. In an example, cross-checking of the gear position is performed during a gear shifting process (including gear disengagement and engagement). In another example, cross-checking of the gear position is performed when the vehicle is powered on or operating.

In step 420, two specific inspection methods are employed to address the situation where the first position sensor indicates that the shift fork is not in neutral and the situation where the first position sensor indicates that the shift fork is in neutral.

When it is determined that the first position sensor indicates that the shift fork is not in neutral, a comparison is made between the transmission ratio determined by the first position sensor and the second transmission ratio determined by the input and output shaft speeds of the transmission. When it is determined that the transmission ratio determined by the first position sensor does not match the second transmission ratio, the process enters step 430, which is the gear error handling subroutine.

When it is determined that the first position sensor indicates that the shift fork is in neutral, the position of the transmission component of the shift actuator is determined by the second position sensor. When it is determined that the position of the transmission component of the shift actuator indicated by the second position sensor indicates that the shift fork is not in neutral, the process enters step 430, which is the gear error handling subroutine.

In one example, the transmission component of the shift actuator comprises a shift cam. When the second position sensor indicates that the angle of the shift cam is outside the predetermined range, it is determined that the shift fork is not in neutral. The second position sensor is an angle sensor disposed relative to the axle of the shift cam.

In another example, the second position sensor is a Hall sensor that detects the rotor angle of the shift motor. The process of determining the angle of the shift cam involves converting the rotor angle into an angle of the shift cam.

In another example, the first position sensor is a Hall sensor disposed relative to the shift fork shaft. The process of determining the fork position of the shift fork involves converting the rotation of the fork shaft into linear movement of the end of the shift fork arm.

In step 430, the gear error handling subroutine may include sending a zero torque request to the drive motor controller of the vehicle. When the cross-check fails, the current transmission ratio becomes unreliable, which may lead to unexpected acceleration of the vehicle. At this point, the transmission controller may control the vehicle to enter a relatively safe state. Those skilled in the art would understand that for a failed cross-check, additional gear error handling subroutines may be established to promptly eliminate potential safety hazards. In other examples, the transmission controller may notify the vehicle controller unit of a cross-check failure signal, and the vehicle controller unit then prompts the fault information through the vehicle human-machine interaction interface.

The gear position cross-check process executed by the transmission controller, as shown in FIG. 4, may be implemented by one or more software function units within the transmission controller. Function unit division is logical function division, and there may be another division manner during implementation. A plurality of units and apparatuses may be physically separate or may be distributed over network units, which may be combined or may be integrated into another system.

The various steps in the flowcharts in FIGS. 2 to 4 can be realized through computer program instructions. These computer program instructions can be provided to the processor of a general-purpose computer, a dedicated computer, or other programmable data-processing device to create a machine for the purpose of the execution of these instructions by the processor of the computer or other programmable data-processing device. In some alternative examples for realization, the steps shown in the boxes may take place in an order different from what is shown in the flowchart. For example, the two boxes shown in sequence may actually be executed in an essentially simultaneous manner or in a different order.

FIG. 5 is a block diagram of the transmission controller according to one example of the present invention. A vehicle transmission controller 500 is utilized to implement, for example, a control operation of the transmission controller 11 in FIG, 1, and is applied to the control method shown in FIGS 2 to 4. The transmission controller 500 includes a processor 510 and a memory 520. The processor 510 and the memory 520 communicate via a bus, or may communicate via other means such as wireless transmission. The memory 520 is configured to store instructions and the processor 510 is configured to execute the instructions stored by the memory 520. The memory 520 may include a read-only memory (ROM) or random-access memory (RAM). The processor 510 may invoke program code stored in the memory 520 to perform a plurality of steps of the method described above. The transmission controller 500 further includes an internal memory and a communication interface not shown in FIG. 5. The transmission controller 500 communicates with various vehicle electronic components via an input/output (I/O) interface. Computer program code stored in the memory 520 is loaded into the internal memory, and is then executed by the processor 510. The above one or more examples and one or more examples may be realized in whole or in part through software, hardware, or combinations thereof. When using software, they may be realized in whole or in part in the form of a computer program product. The computer program product comprises computer program instructions that may be downloaded to the memory of a controller via a computer network or may be transmitted to the memory of the controller in a wired fashion, which, when the computer program instructions are executed by the processor of the controller, the processor is capable of executing perform one or more steps in the method described herein. The computer program instructions may be provided in the form of a computer-readable storage medium. A computer-readable storage medium referred to herein may be any usable medium that can be accessed by a general-purpose or dedicated computer.

The above descriptions are only specific examples of the present invention. Where appropriate, the examples of the present invention and the features of the examples may be combined with each other. The scope of protection of the present invention is subject to the scope of protection of the claims.

## Claims

1. A method for detecting a gear position of a vehicle transmission (10), wherein the vehicle transmission (10) comprises a shift actuator (12), which includes a shift motor, a transmission component and a shift fork,
wherein the transmission component is configured to convert rotational output of the shift motor into axial movement of the shift fork along an input shaft direction of the vehicle transmission (10),
wherein the axial movement of the shift fork pushes a shift collar or a synchronizer, thereby engaging or disengaging shift gears of the vehicle transmission (10) with transmission gears of the vehicle transmission (10), enabling the establishment of different transmission ratios;
wherein the method comprises:
determining a position of the shift fork from a first position sensor;
comparing a first transmission ratio and a second transmission ratio when it is determined that the first position sensor indicates that the shift fork is not in neutral position, wherein the first transmission ratio is determined by the first position sensor and the second transmission ratio is determined by an input shaft speed and an output shaft speed of the transmission;
entering a gear error handling subroutine when it is determined that the first transmission ratio and the second transmission ratio do not match; wherein the gear error handling routine includes rebooting a vehicle, triggering a braking process, or interrupting torque transmission of the vehicle; and
wherein the method is **characterized by** determining a position of the transmission component of the shift actuator (12) through a second position sensor when it is determined that the first position sensor indicates that the shift fork is in neutral position;
entering the gear error handling subroutine when it is determined that the position of the transmission component of the shift actuator (12) determined by the second position sensor indicates that the shift fork is not in neutral position.

2. The method according to Claim 1, **characterized in that**
the transmission component of the shift actuator (12) includes a shift cam, and when the second position sensor indicates that an angle of the shift cam is outside a predetermined range, it is determined that the shift fork is not in neutral position.

3. The method according to Claim 2, **characterized in that**
as the second position sensor an angle sensor disposed relative to the axle of the shift cam is used.

4. The method according to Claim 2, **characterized in that**
the second position sensor is a Hall sensor used to detect a rotor angle of the shift motor,
the process of determining an angle of the shift cam includes converting a rotor angle to an angle of the shift cam.

5. The method according to Claim 1, **characterized in that**
the first position sensor is a Hall sensor disposed relative to a shift fork shaft;
the process of determining a position of the shift fork involves converting the rotation of the shift fork shaft into a linear movement of the end of a shift fork arm.

6. A transmission controller (500) for detecting a gear position of a vehicle transmission (10), wherein the vehicle transmission (10) comprises a shift actuator (12), which includes a shift motor, a transmission component and a shift fork,
wherein the transmission component is configured to convert rotational output of the shift motor into axial movement of the shift fork along an input shaft direction of the vehicle transmission (10),
wherein the axial movement of the shift fork pushes a shift collar or a synchronizer, thereby engaging or disengaging shift gears of the vehicle transmission (10) with transmission gears of the vehicle transmission (10) enabling the establishment of different transmission ratios;
wherein the controller (500) comprises a processor (510) and a memory (520), wherein the memory (520) stores computer program instructions that, when executed by the processor (510), cause the processor (510) to perform the method according to any one of claims 1 to 5.

7. A computer program product comprising computer program instructions, which when executed by a processor (510), cause the processor (510) to carry out the method according to any one of claims 1 to 5.

8. A computer-readable storage medium (520) comprising instructions, which when executed by a processor (510), cause the processor (510) to carry out the method according to any one of claims 1 to 5.

## Patentansprüche

1. Verfahren zum Detektieren einer Schaltstellung eines Fahrzeuggetriebes (10), wobei das Fahrzeuggetriebe (10) einen Schaltaktuator (12) umfasst, der einen Schaltmotor, ein Getriebebauteil und eine Schaltgabel aufweist,
wobei das Getriebebauteil dazu ausgelegt ist, die Drehleistung des Schaltmotors in eine axiale Bewegung der Schaltgabel entlang einer Eingangswellenrichtung des Fahrzeuggetriebes (10) umzuwandeln,
wobei durch die axiale Bewegung der Schaltgabel eine Schaltmuffe oder eine Synchronisiereinrichtung verschoben wird, wodurch Gangräder des Fahrzeuggetriebes (10) mit Schalträdern des Fahrzeuggetriebes (10) in Eingriff und außer Eingriff gebracht werden, wodurch die Einrichtung verschiedener Übersetzungsverhältnisse ermöglicht wird; wobei das Verfahren Folgendes umfasst:
Bestimmen einer Stellung der Schaltgabel von einem ersten Stellungssensor;
Vergleichen eines ersten Übersetzungsverhältnisses und eines zweiten Übersetzungsverhältnisses, wenn bestimmt wird, dass der erste Stellungssensor anzeigt, dass sich die Schaltgabel nicht in Neutralstellung befindet, wobei das erste Übersetzungsverhältnis durch den ersten Stellungssensor und das zweite Übersetzungsverhältnis durch eine Eingangswellendrehzahl und eine Ausgangswellendrehzahl des Getriebes bestimmt wird;
Aufrufen einer Verzahnungsfehlerbehandlungsunterroutine, wenn bestimmt wird, dass das erste Übersetzungsverhältnis und das zweite Übersetzungsverhältnis nicht übereinstimmen; wobei die Verzahnungsfehlerbehandlungsroutine das erneute Starten eines Fahrzeugs, das Auslösen eines Bremsvorgangs oder das Unterbrechen einer Drehmomentübertragung des Fahrzeugs beinhaltet; und
wobei das Verfahren durch Folgendes gekennzeichnet ist:
Bestimmen einer Stellung des Getriebebauteils des Schaltaktuators (12) durch einen zweiten Stellungssensor, wenn bestimmt wird, dass der erste Stellungssensor anzeigt, dass sich die Schaltgabel in Neutralstellung befindet;
Aufrufen der Verzahnungsfehlerbehandlungsunterroutine, wenn bestimmt wird, dass die durch den zweiten Stellungssensor bestimmte Stellung des Getriebebauteils des Schaltaktuators (12) anzeigt, dass sich die Schaltgabel nicht in Neutralstellung befindet.

2. Verfahren nach Anspruch 1, **dadurch gekennzeichnet, dass**
das Getriebebauteil des Schaltaktuators (12) einen Schaltnocken aufweist und, wenn der zweite Stellungssensor anzeigt, dass ein Winkel des Schaltnockens außerhalb eines vorgegebenen Bereichs liegt, bestimmt wird, dass sich die Schaltgabel nicht in Neutralstellung befindet.

3. Verfahren nach Anspruch 2, **dadurch gekennzeichnet, dass**
als der zweite Stellungssensor ein relativ zur Achse des Schaltnockens angeordneter Winkelsensor verwendet wird.

4. Verfahren nach Anspruch 2, **dadurch gekennzeichnet, dass**
der zweite Stellungssensor ein zum Detektieren eines Rotorwinkels des Schaltmotors verwendeter Hall-Sensor ist, der Vorgang zum Bestimmen eines Winkels des Schaltnockens das Umwandeln eines Rotorwinkels in einen Winkel des Schaltnockens beinhaltet.

5. Verfahren nach Anspruch 1, **dadurch gekennzeichnet, dass**
der erste Stellungssensor ein relativ zu einer Schaltgabelwelle angeordneter Hall-Sensor ist;
der Vorgang zum Bestimmen einer Stellung der Schaltgabel die Drehung der Schaltgabelwelle in eine lineare Bewegung des Endes eines Schaltgabelarms involviert.

6. Getriebesteuerung (500) zum Detektieren einer Schaltstellung eines Fahrzeuggetriebes (10), wobei das Fahrzeuggetriebe (10) einen Schaltaktuator (12) umfasst, der einen Schaltmotor, ein Getriebebauteil und eine Schaltgabel aufweist,
wobei das Getriebebauteil dazu ausgelegt ist, die Drehleistung des Schaltmotors in eine axiale Bewegung der Schaltgabel entlang einer Eingangswellenrichtung des Fahrzeuggetriebes (10) umzuwandeln,
wobei durch die axiale Bewegung der Schaltgabel eine Schaltmuffe oder eine Synchronisiereinrichtung verschoben wird, wodurch Gangräder des Fahrzeuggetriebes (10) mit Schalträdern des Fahrzeuggetriebes (10) in Eingriff und außer Eingriff gebracht werden, wodurch die Einrichtung verschiedener Übersetzungsverhältnisse ermöglicht wird;
wobei die Steuerung (500) einen Prozessor (510) und einen Speicher (520) umfasst, wobei der Speicher (520) Computerprogrammanweisungen speichert, die, wenn sie durch den Prozessor (510) ausgeführt werden, bewirken, dass der Prozessor (510) das Verfahren nach einem der Ansprüche 1 bis 5 durchführt.

7. Computerprogrammprodukt, das Computerprogrammanweisungen umfasst, die, wenn sie durch einen Prozessor (510) ausgeführt werden, bewirken, dass der Prozessor (510) das Verfahren nach einem der Ansprüche 1 bis 5 vollzieht.

8. Computerlesbares Speichermedium (520), das Anweisungen umfasst, die, wenn sie durch einen Prozessor (510) ausgeführt werden, bewirken, dass der Prozessor (510) das Verfahren nach einem der Ansprüche 1 bis 5 vollzieht.

## Revendications

1. Procédé de détection d'une position de vitesse d'une transmission de véhicule (10), dans lequel la transmission de véhicule (10) comprend un actionneur de changement de vitesse (12), qui comprend un moteur de changement de vitesse, un composant de transmission et une fourchette de changement de vitesse,
dans lequel le composant de transmission est configuré pour convertir la sortie de rotation du moteur de changement de vitesse en un mouvement axial de la fourchette de changement de vitesse le long d'une direction d'arbre d'entrée de la transmission de véhicule (10),
dans lequel le mouvement axial de la fourchette de changement de vitesse pousse un collet de changement de vitesse ou un synchroniseur, engageant ou désengageant ainsi les pignons de changement de vitesse de la transmission de véhicule (10) avec les pignons de transmission de la transmission de véhicule (10), ce qui permet d'établir différents rapports de transmission ; le procédé comprenant :
la détermination d'une position de la fourchette de changement de vitesse par un premier capteur de position ;
la comparaison d'un premier rapport de transmission et d'un second rapport de transmission lorsqu'il est déterminé que le premier capteur de position indique que la fourchette de changement de vitesse n'est pas à la position du point mort, le premier rapport de transmission étant déterminé par le premier capteur de position et le second rapport de transmission étant déterminé par une vitesse d'arbre d'entrée et une vitesse d'arbre de sortie de la transmission ;
l'entrée dans un sous-programme de traitement des erreurs de vitesse lorsqu'il est déterminé que le premier rapport de transmission et le second rapport de transmission ne correspondent pas ; le programme de traitement des erreurs de vitesse comprenant le redémarrage d'un véhicule, le déclenchement d'un processus de freinage ou l'interruption de la transmission de couple du véhicule ; et
le procédé étant **caractérisé par** la détermination d'une position du composant de transmission de l'actionneur de changement de vitesse (12) par l'intermédiaire d'un second capteur de position lorsqu'il est déterminé que le premier capteur de position indique que la fourchette de changement de vitesse est en position neutre ;
l'entrée dans le sous-programme de traitement des erreurs de vitesse lorsqu'il est déterminé que la position du composant de transmission de l'actionneur de changement de vitesse (12) déterminée par le second capteur de position indique que la fourchette de changement de vitesse n'est pas en position neutre.

2. Procédé selon la revendication 1, **caractérisé en ce que**
le composant de transmission de l'actionneur de changement de vitesse (12) comprend une came de changement de vitesse, et lorsque le second capteur de position indique qu'un angle de la came de changement de vitesse est en dehors d'une plage prédéterminée, il est déterminé que la fourchette de changement de vitesse n'est pas en position neutre.

3. Procédé selon la revendication 2, **caractérisé en ce que**
comme second capteur de position, on utilise un capteur d'angle disposé par rapport à l'axe de la came de changement de vitesse.

4. Procédé selon la revendication 2, **caractérisé en ce que**
le second capteur de position est un capteur à effet Hall utilisé pour détecter un angle de rotor du moteur de changement de vitesse, le processus de détermination d'un angle de la came de changement de vitesse consiste à convertir un angle de rotor en un angle de la came de changement de vitesse.

5. Procédé selon la revendication 1, **caractérisé en ce que**
le premier capteur de position est un capteur à effet Hall disposé par rapport à un arbre de fourchette de changement de vitesse ;
le processus de détermination d'une position de la fourchette de changement de vitesse consiste à convertir la rotation de l'arbre de la fourchette de changement de vitesse en un mouvement linéaire de l'extrémité d'un bras de la fourchette de changement de vitesse.

6. Contrôleur de transmission (500) destiné à détecter une position de vitesse d'une transmission de véhicule (10), la transmission de véhicule (10) comprend un actionneur de changement de vitesse (12), qui comprend un moteur de changement de vitesse, un composant de transmission et une fourchette de changement de vitesse, dans lequel le composant de transmission est configuré pour convertir la sortie de rotation du moteur de changement de vitesse en un mouvement axial de la fourchette de changement de vitesse le long d'une direction d'arbre d'entrée de la transmission de véhicule (10),
dans lequel le mouvement axial de la fourchette de changement de vitesse pousse un collet de changement de vitesse ou un synchroniseur, engageant ou désengageant ainsi les pignons de changement de vitesse de la transmission de véhicule (10) avec les pignons de transmission de la transmission de véhicule (10), ce qui permet d'établir différents rapports de transmission ;
le contrôleur (500) comprenant un processeur (510) et une mémoire (520), laquelle mémoire (520) stocke des instructions de programme informatique qui, lorsqu'elles sont exécutées par le processeur (510), amènent le processeur (510) à exécuter le procédé selon l'une quelconque des revendications 1 à 5.

7. Produit de programme informatique comprenant des instructions de programme informatique qui, lorsqu'elles sont exécutées par un processeur (510), amènent le processeur (510) à exécuter le procédé selon l'une quelconque des revendications 1 à 5.

8. Support de stockage lisible par ordinateur (520) comprenant des instructions qui, lorsqu'elles sont exécutées par un processeur (510), amènent le processeur (510) à exécuter le procédé selon l'une quelconque des revendications 1 à 5.
